# EUROPÄISCHE PATENTSCHRIFT

(11) **EP 0 588 989 B1**
(45) Veröffentlichungstag und Bekanntmachung des Hinweises auf die Patenterteilung: **14.12.1994**
(21) Anmeldenummer: 92924470.5
(22) Anmeldetag: 28.05.1992
(51) Int. Cl.: D06N 3/00, D06N 3/14, B32B 5/18, B32B 5/24

(54) **VERFAHREN ZUM FLAMMKASCHIEREN VON TEXTILIEN**
PROCESS FOR FLAME-BACKING TEXTILES
PROCEDE POUR LA LIAGE PAR FLAMME DE TEXTILES

(30) Priorität: 30.05.1991 DE 4117709
(43) Veröffentlichungstag der Anmeldung: 30.03.1994
(73) Patentinhaber: KOEPP AKTIENGESELLSCHAFT, D-65375 Oestrich-Winkel (DE)
(72) Erfinder: REMMERT, Hans-Jürgen, D-6730 Neustadt/Weinstrasse (DE); SCHULTE, Werner, D-6200 Wiesbaden (DE); TETLOW, Jack, Lowerfold Rochdale Lancs. (GB)
(74) Vertreter: Werner, Hans-Karsten, Dr.Dipl.-Chem.
(86) Internationale Anmeldenummer: EP9201189
(87) Internationale Veröffentlichungsnummer: WO9221810

(56) Entgegenhaltungen:
- FR-A- 2 125 575
- FR-A- 2 173 318
- GB-A- 1 384 276
- GB-A- 1 477 180

## Beschreibung

Gegenstand der Vorliegenden Erfindung ist ein Verfahren zum Flammkaschieren von Textilien mit PUR-Schaum durch direktes Beflammen der Oberfläche der Schaumstoffschicht und anschließendes Aufeinanderpressen. Es handelt sich um eine im großen Umfang durchgeführte Methode, die sich seit Jahren bewährt hat. Es ist zwar bis heute noch nicht völlig aufgeklärt worden, welche chemischen Reaktionen im einzelnen beim Flammkaschieren von Polyurethanschaum stattfinden, jedoch steht fest, daß diese Methode zu einer exzellenten und lange Zeit haltbaren Verbindung der Textilien mit dem Polyurethanschaum führt. Versuche, das Abbrennen von Polyurethanschaum zu vermeiden und statt dessen Heißschmelzkleber zu verwenden, haben sich in der Praxis weniger bewährt, da dabei weniger gute und weniger haltbare Verbindungen zwischen Textilien und Polyurethanschaum entstehen. Ein derartiges Verfahren ist beispielsweise beschrieben in der US-A-3,829,343 der Anmelderin.

Ein Nachteil des weltweit praktizierten Flammkaschierens besteht darin, daß beim Anflammen des Polyurethanschaums neben den stark klebenden, in der Hitze flüssigen Spaltprodukten des Polyurethans auch staubförmige, sublimierende und gasförmige toxische Anteile, wie Toluol-Diisocyanat und NCO-haltige Produkte anfallen, wodurch Umwelt und Arbeitsplätze der Produktionsanlagen belastet werden.

Die vorliegende Erfindung hat sich vor allem die Aufgabe gestellt, den Anfall an diesen Nebenprodukten zu vermindern und nach Möglichkeit auch diese Anteile aus dem ursprünglichen Polyurethanschaum zum Verkleben der Textilien mit dem Polyurethanschaum zu verwenden. Dabei soll jedoch die Qualität der Verklebung nicht verschlechtert werden. Weiterhin sollen keine neuen umweltrelevanten Probleme entstehen.

Diese Aufgabe kann überraschend einfach dadurch gelöst werden, daß die zu beflammende Oberfläche des PUR-Schaums zuvor mit einer relativ geringen Menge eines halogenfreien Materials beschichtet wird, welches mittels reaktiver Hydroxylgruppen oder anderer reaktiver Gruppen mit den beim Flammkaschieren aus dem PUR-Schaum entstehenden Isocyanatgruppen-haltigen Produkten zu reagieren vermag.

Geeignet hierfür sind Materialien, welche die reaktiven Hydroxylgruppen oder anderen reaktiven Gruppen schon vor dem Flammkaschieren enthalten oder sie beim Flammkaschieren ausbilden.

Ungeeignet sind hingegen halogenierte Polymere, wie Polyvinylchlorid und dessen Derivate, da hieraus beim Flammkaschieren halogenhaltige Abgase entstehen. Ungeeignet sind weiterhin Polyhydroxy-Verbindungen, wie Cellulose, Stärke und Zucker, da sie unter den Bedingungen des Flammkaschierens verkohlen und dadurch die Verklebungen verschlechtern.

Geeignete Materialien im Sinne der Erfindung sind beispielsweise
- Polyalkylene, wie Polybuten, Polyethylen, Polyisobutylen, Polypropylen, Polymethylpenten, sowie deren Mischpolymerisate,
- Polyalkylenoxide, wie Polyethylen- und Polypropylen-Oxid,
- Vinylpolymerisate, wie Polyvinylacetate, -acetale, -alkohole, -ether, -carbazole sowie deren Mischpolymerisate,
- Polystyrole, wie Methylpolystyrole, Mischpolymerisate mit anderen Thermoplasten und Elastomeren wie Butadien,
- Polyacrylverbindungen, wie Polyacrylate und Mischpolymerisate und Polymethacrylate, Polybutylacrylate,
- Polyamide und Polyimide und deren Mischpolymerisate und Polyaminprodukte,
- Polyacrylnitril und dessen Mischpolymerisate,
- Polyphthalate, Polyterephthalate und deren Mischpolymerisate,
- thermoplastische Polyacetale und andere Polyaldehyde,
- Polycarbonate,
- thermoplastische Epoxide und deren Mischpolymerisate,
- thermoplastische Polyester und Polyether,
- thermoplastische Elastomere und Mischpolymerisate,
- Naturstoffderivate, wie Lackharze und unvernetzte natürliche Elastomere, thermoplastische Cellulosederivate und deren Mischpolymerisate.

Außer den vorstehend genannten Kunststoffen kommen als reagierende Substanzen im Sinne der Erfindung auch deren Vorprodukte sowie nachstehende Substanzen bzw. Substanzgruppen in Frage:

Für die Reaktion: NCO mit OH-Komponenten:
- Alkohole, Polyalkohole, Phenole, deren Derivate und Salze,
- Carbonsäuren und deren Anhydride sowie Carbonsäureester und -ether,
- Hydroxylamine, Oxime, Hydroaminosäuren und andere OH-gruppenhaltige Verbindungen,
- Wasser und wasserabspaltende Verbindungen.

Für die Reaktion: NCO mit NH-Komponenten:
- Amine, Amide, Imide, Amidine, Nitramine, Aminooxime,
- Aminosäuren und Derivate sowie Salze der Aminosäuren,
- Harnstoffe und Derivate,
- Urethane,
- Hydrazine, Hydrazone, Hydrazonsäuren und Derivate,
- Cyanamide,
- Diazo-Amino-Verbindungen.

Für die Reaktion: NCO mit CH-Komponenten:
- Ester organischer Säuren,
- Nitroalkane
- Verbindungen mit 2 aktiven Gruppen, wie Carbonyl- und Nitrilgruppen,
- zyklische Verbindungen, wie Pyridin, Pyrrol u.a.

Für die Reaktion: NCO mit anderen ungesättigten Verbindungen:
- Nitroso-Verbindungen,
- Aldehyde und Derivate,
- Ketone und Derivate,
- Verbindungen welche C=N Gruppen enthalten.

Als weitere reagierende Additive und/oder Katalysatoren der NCO-Reaktionen sind anorganische Verbindungen geeignet wie:
- Schwefelverbindungen, Derivate der Schwefelsäuren und Salze der Schwefelsäuren,
- Phosphorverbindungen, Derivate der Phosphorsäuren und Salze der Phosphorsäuren,
- Borsäuren, Salze der Borsäuren, Borsäureester, Alkyl- und Arylborane und andere Borsäureverbindungen,
- Silane,
- organische Metallverbindungen.

Die dünne Schicht eines solchen Materials kann erfindungsgemäß in Form von Pulvern, Lösungen, Dispersionen, Vliesen oder Folien auf den PUR-Schaum aufgebracht werden. Dies kann entweder unmittelbar vor dem Flammkaschieren geschehen oder aber auch in einem unabhängigen vorgeschalteten Verfahrensschritt, so daß entsprechende lager- und transportfähige Zwischenprodukte entstehen, welche gegebenenfalls sogar als Zwischenprodukte in den Handel gebracht werden können.

In allen Fällen muß dafür gesorgt werden, daß diese Materialien auf dem Polyurethanschaum so gleichmäßig verteilt und ausreichend fixiert sind, daß sie vollständig und unversehrt bis in die Zone des Beflammens gebracht werden können.

In der Zone des Beflammens wird mit solchen Temperaturen gearbeitet, daß nicht nur ein Teil des Polyurethanschaums in gewohnter Weise, sondern auch das zusätzlich aufgebrachte Material partiell thermisch zersetzt wird. Bei diesem partiellen thermischen Abbau bilden die oben genannten Kunststoffe vor allem reaktive Hydroxylgruppen aus, teilweise aber auch andere reaktive Gruppen, die mit Isocyanatgruppen zu reagieren vermögen. Es entsteht erfindungsgemäß an der Oberfläche eine heiße, partiell verbrannte flüssige Schicht aus Polyurethan-Spaltprodukten einerseits sowie dem zusätzlich aufgetragenen partiell thermisch abgebauten Material mit den reaktiven Hydroxylgruppen oder anderen reaktiven Gruppen andererseits. Diese Schicht ist nicht nur in der Lage wie beim üblichen Flammkaschieren mit den Textilien gut, fest und dauerhaft zu verkleben, sondern sie ist zusätzlich in der Lage, die entstandenen Isocyanatgruppen-haltigen Spaltprodukte des Polyurethans zu binden. Beim Abkühlen und Nachreagieren der fertig kaschierten Produkte sind die in der Schmelzkleberschicht entstandenen freien Isocyanatgruppen in der Lage mit den reaktiven Hydroxylgruppen oder anderen reaktiven Gruppen zu reagieren und sich dadurch zu stabilisieren.

Durch die Kombination der Schmelzen aus dem Polyurethan und dem zusätzlich aufgebrachten Material wird erreicht, daß die für die nötige Kaschier-Haftung erforderliche Menge PUR-Abbrand deutlich geringer ist als bei dem konventionellen Verfahren. Neben dem wirtschaftlichen Vorteil fällt so a priori eine entsprechend geringere Schadstoffmenge an.

Weiter wurde beobachtet, daß beim erfindungsgemäßen Verfahren der Anteil an staubigen, sublimierenden und gasförmigen Anteilen des Abbrandes erheblich reduziert werden kann. Offensichtlich sind die Komponenten aus dem zusätzlichen Material mit den reaktiven Hydroxylgruppen oder anderen reaktiven Gruppen in der Lage, die beim Abbrand von Polyurethanschaum entstehenden, flüchtigen, niedermolekularen Produkte mechanisch und chemisch zu binden.

Während beim üblichen Flammkaschieren ohne die erfindungsgemäß verwendete zusätzliche Schicht über 50 % des abgebrannten Schaumes als nutzlose und schädliche Emission verlorengeht, wird erfindungsgemäß dieser Substanzverlust deutlich reduziert und wird das abgebundene Material - wenigstens zum Teil - in den Haft-Effekt einbezogen.

Hierdurch ist die Belastung des Arbeitsplatzes und der Umwelt mit TDI und NCO-haltigen Zersetzungs-Produkten des PUR weiter deutlich verringert.

Diese chemische Nachreaktion und Stabilisierung kann erfindungsgemäß dadurch beschleunigt werden, daß entweder die Oberfläche des PUR-Schaums oder die dünne Schicht des Materials eine kleine Menge eines hitzebeständigen Katalysators für die Reaktion der Isocyanatgruppen mit OH-Gruppen enthält oder ausbildet. Besonders geeignet sind mineralische Säuren, von denen wiederum Phosphorsäure besonders bevorzugt ist. Die Phosphorsäure kann entweder in reiner Form oder in Form von Derivaten zugesetzt werden, welche beim Flammkaschieren Phosphorsäure freisetzen.

Dadurch verkürzt sich die Zeit der Stabilisierung der aufgeschmolzenen Teile, so daß die gewünschte Haftung im allgemeinen schon nach kürzerer Zeit eintritt. Insbesondere bei Zusatz von Katalysatoren, wie Phosphorsäure oder phosphorsäurebildenden Komponenten, wird dieser Effekt deutlich verstärkt, ein Effekt der insbesondere bei dem Flammkaschieren von Ether-PUR erwünscht ist.

Für das erfindungsgemäße Verfahren können praktisch alle Arten von PUR-Schaum eingesetzt werden, insbesondere geeignet sind die Schäume auf Ester- oder Etherbasis. Sie werden als Bahnen in Dicken zwischen 0,5 und 50 mm aus einem Slabstock geschnitten.

Beim erfindungsgemäßen Verfahren ist es nicht nötig, die gesamte Schaumrezeptur zu ändern, nur um das Verhalten beim Flammkaschieren zu verbessern. Es kann daher mit optimalen und preiswerten Normalschäumen gearbeitet werden, da nur die Grenzfläche von 0,1 bis 2 mm durch die Verwendung einer dünnen Schicht eines zusätzlichen Materials verändert und für die Bedingungen des Flammkaschierens optimiert werden.

Als Textilien für das erfindungsgemäße Verfahren kommen praktisch alle flächigen Bahnmaterialien in Frage, vorzugsweise aus Fasern. Es können in gewohnter Weise Gewebe, Gewirke, Vliese, aber auch Kunstleder und Folien mit dem PUR-Schaum flammkaschiert werden.

Das Flammkaschieren erfolgt in bekannter Weise, in dem die Schaumstoffbahn kontinuierlich im Durchlauf durch eine offene Flamme einseitig so erhitzt wird, daß 0,1 bis 2 mm unter Zersetzung eine Schmelze bilden, die tropfenförmig auf den darunterliegenden Zellstegen hängt. Das damit zu verbindende Textil wird unmittelbar danach kontinuierlich in die erstarrende Schmelze kalandriert und danach auf der Wickel unter Vorspannung gehalten, bis nach 10¹ bis 10³ Sekunden die gewünschte Haftung eintritt.

Das Auftragen der dünnen Schicht erfolgt erfindungsgemäß besonders vorteilhaft unmittelbar vor dem Flammkaschieren und im kontinuierlichen Durchlauf. Dennoch ist auch die Herstellung entsprechender Zwischenprodukte möglich und von Fall zu Fall sinnvoll. Wichtig allein ist, daß diese zusätzliche Schicht gleichmäßig auf der Schaumoberfläche verteilt vorliegt und dort ausreichend fixiert ist, um nicht beim Flammkaschieren abgerissen und weggeblasen zu werden. Besonders einfach ist daher das Auftragen in Form einer Folie oder eines Vlieses, wobei diese in an sich bekannter Weise zuvor verklebt oder vernadelt werden können, um sie auf der Schaumbahn zu fixieren. Bei Verwendung einer Folie kann beispielsweise so verfahren werden wie in der US-A-3,829,343 bis hin zur Rolle 2. Anstelle des zweiten Wärmestrahlers wird hingegen erfindungsgemäß flammkaschiert und dabei ein Teil des Polyurethanschaums abgebrannt und das Polyethylen anoxidiert, wobei sich ein Gemisch aus angebranntem aufgeschmolzenen Polyurethanschaum und anoxidiertem und aufgeschmolzenem Polyethylen bildet. Die Qualität der so entstandenen flammkaschierten Textilien ist deutlich besser als beim Verkleben mit aufgeschmolzenem Polyethylen gemäß US-A-3,829,343.

Bei Verwendung geeignet ausgebildeter Andruckrollen ist es möglich, Folien auch ohne vorhergehende Fixierung unmittelbar und lose in die Beflammungszone mit einlaufen zu lassen. Das gelingt insbesondere, wenn vorher eine innere Spannung der Folie durch mechanisches Öffnen - Nadeln, Lochen, Schlitzen u.ä. - abgebaut wurde.

Bei einigen Materialien in Folien- oder Vliesform ist es möglich, schon vor dem Flammkaschieren reaktive Hydroxylgruppen zu erzeugen, beispielsweise durch eine Corona-Behandlung. Im allgemeinen entstehen jedoch unter den Bedingungen der Flammkaschierung ausreichend viele reaktive Hydroxylgruppen und sonstige reaktive Gruppen, um die beim Flammkaschieren ebenfalls entstehenden freien Isocyanatgruppen anschließend vollständig abreagieren zu lassen.

Eine Corona-Behandlung kann jedoch vorteilhaft sein, um eine Folie oder ein Vlies wirksamer mit dem Polyurethanschaum zu verkleben, bevor dieses Material flammkaschiert wird. Sofern die erfindungsgemäß verwendete dünne Schicht nicht als Folie oder Vlies aufgetragen wird, können übliche Streuvorrichtungen für Pulver verwendet werden oder Rakel oder Spritzdüsen sowie Druckwalzen für Pasten und Flüssigkeiten.

Ferner können vorstehende Materialformen zweckmäßig untereinander kombiniert sein, wie etwa Verbundfolien, Pasten und ähnliches in Vliesen, Extender in Folien, gestaffelte Aufträge mehrerer Komponenten auch unterschiedlicher Materialform nacheinander und ähnliches mehr.

### BEISPIEL

Eine 4 mm dicke Polyester-Polyurethan-Schaumbahn von 1600 mm Breite - mit 20 µm bzw. 30 µm LD-PE-Folie vorkaschiert - wurde auf einer kommerziellen Flammkaschier-Anlage mit 18 m/min gegen Natronkraft-Papier kaschiert, wobei die PE-Folie auf der dem Brenner zugewandten Seite lag. Die PE-Schicht wurde dabei völlig abgebrannt.

Unter vergleichbaren Bedingungen wurde auf der gleichen Anlage eine handelsübliche 4 mm-Polyester-Polyurethan-Schaumbahn gleicher Breite flammkaschiert.

Die Werte der Emission wichtiger Schadstoffe am Ausgang des Absaugekamins und der Arbeitsplatz-Konzentration hinter den Kaschierwalzen der Anlage wurden in Intervallen von jeweils 15 Minuten gemessen und verglichen. Bezogen auf die Werte für handelsüblichen Schaum als 100 %, ergaben sich folgende Meßwerte:

| Emission | 20 µm PE | 30 µm PE |
|---|---|---|
| TDI | 16 % | 6 % |
| HCN | 25 % | 21 % |
| Org. C | 36 % | 56 % |
| CO | 73 % | 65 % |

| Arbeitsplatzkonzentration | | |
|---|---|---|
| TDI | 7 % | 0 % |
| HCN | 22 % | 5 % |
| CO | 27 - 46 % | 18 - 32 % |

Der Dickenverlust der Schaumschicht nach der Flammkaschierung wurde bei handelsüblichem Schaum mit 0,3 mm ermittelt. An den mit PE vorkaschierten PU-Schaumbahnen wurde kein Dickenverlust beobachtet.

Werte für Haftfestigkeit im Schälversuch konnten nicht ermittelt werden, da die erreichte Haftung erheblich über der Reißfestigkeit der aufkaschierten Schaumschicht lag.

## Patentansprüche

1. Verfahren zum Flammkaschieren von Textilien mit PUR-Schaum durch direktes Beflammen der Oberfläche der Schaumstoffschicht und anschließendes Aufeinanderpressen, dadurch gekennzeichnet, daß die zu beflammende Oberfläche des PUR-Schaums zuvor mit einer relativ geringen Menge eines halogenfreien Materials beschichtet wird, welches mittels reaktiver Hydroxylgruppen oder anderer reaktiver Gruppen mit den beim Flammkaschieren aus dem PUR-Schaum entstehenden Isocyanatgruppen-haltigen Produkten zu reagieren vermag.

2. Verfahren gemäß Anspruch 1, dadurch gekennzeichnet, daß die reaktiven Hydroxylgruppen oder anderen reaktiven Gruppen des Materials schon vor dem Flammkaschieren vorhanden sind und/oder sich erst beim Flammkaschieren bilden.

3. Verfahren gemäß Anspruch 1 oder 2, dadurch gekennzeichnet, daß die dünne Schicht des Materials in Form von Pulvern, Lösungen, Dispersionen, Vliesen oder Folien auf den PUR-Schaum aufgebracht werden.

4. Verfahren gemäß einem der Ansprüche 1 bis 3, dadurch gekennzeichnet, daß entweder die Oberfläche des PUR-Schaums oder die dünne Schicht des Materials einen hitzebeständigen Katalysator für die Reaktion der Isocyanatgruppen enthält oder ausbildet.

5. Verfahren gemäß Anspruch 4, dadurch gekennzeichnet, daß dieser Katalysator Phosphorsäure ist.

## Claims

1. A process for flame-backing textiles with polyurethane foam by directly flaming the surface of the foam layer followed by pressing it onto the textile, characterized in that the surface of the polyurethane foam which is to be flamed is preliminarily coated with a relatively small amount of a halogen-free material, which is able to react with the isocyanate group containing products, formed from the polyurethane foam during flame-backing, through reactive hydroxyl groups or other reactive groups.

2. A process according to claim 1, characterized in that the reactive hydroxyl groups or other reactive groups of said material are present already before flame-backing and/or are only being formed during flame-backing.

3. A process according to claim 1 or 2, characterized in that the thin layer of said material is coated onto the polyurethane foam in the form of powders, solutions, dispersions, non-wovens or sheets.

4. A process according to any of claims 1 through 3, characterized in that either the surface of said polyurethane foam or the thin layer of said material contains or will form a heat resistant catalyst for the reaction of the isocyanate groups.

5. A process according to claim 4, characterized in that said catalyst is phosphoric acid.

## Revendications

1. Procédé pour contrecoller par flamme des textiles avec de la mousse de polyuréthanne par passage direct à la flamme de la surface de la couche de mousse, puis par pression de l'un sur l'autre, caractérisé en ce que la surface de la mousse de polyuréthanne à passer à la flamme est auparavant enduite d'une quantité relativement faible d'une substance exempte d'halogène, qui est capable de réagir au moyen de groupes hydroxyle réactifs ou d'autres groupes réactifs avec des produits contenant des groupes isocyanate qui se forment à partir de la mousse de polyuréthanne lors du contrecollage par flamme.

2. Procédé selon la revendication 1, caractérisé en ce que les groupes hydroxyle réactifs ou autres groupes réactifs sont déjà présents avant le contrecollage par flamme et/ou se forment seulement lors de ce contrecollage.

3. Procédé selon la revendication 1 ou 2, caractérisé en ce que la couche mince de la substance est appliquée sous forme de poudres, de solutions, de dispersions, de voiles non tissés ou de films sur la mousse de polyuréthanne.

4. Procédé selon l'une des revendications 1 à 3, caractérisé en ce que la surface de la mousse de polyuréthanne ou la couche mince de la substance contient ou constitue un catalyseur thermorésistant pour la réaction des groupes isocyanate.

5. Procédé selon la revendication 4, caractérisé en ce que ce catalyseur est de l'acide phosphorique.
